Europäisches Patentamt

European Patent Office

Office européen des brevets

(11) Numéro de publication : **0 438 940 A2**

(12) # DEMANDE DE BREVET EUROPEEN

(21) Numéro de dépôt : 90403679.5

(22) Date de dépôt : 19.12.90

(51) Int. Cl.⁵ : **B23K 26/14**

(30) Priorité : 28.12.89 FR 8917378

(43) Date de publication de la demande :
**31.07.91 Bulletin 91/31**

(84) Etats contractants désignés :
**BE CH DE ES LI**

(71) Demandeur : **FRAMATOME
Tour Fiat 1, Place de la Coupole
F-92400 Courbevoie (FR)**

(72) Inventeur : **Boudot, Cécile
8, rue de l'Alma
F-71100 Chalon S/Saone (FR)**
Inventeur : **Griffaton, Jacques
6, rue Saint Georges
F-71100 Chalon S/Saone (FR)**

(74) Mandataire : **Jacobson, Claude et al
Cabinet Lavoix 2, Place d'Estienne d'Orves
F-75441 Paris Cedex 09 (FR)**

(54) **Procédé et tête de travail au laser dans un tube.**

(57)   La tête (1) de travail au laser est centrée dans le tube (2) au moyen de deux brosses circulaires ajourées. Le travail au laser est effectué sous protection d'une part d'un gaz primaire sortant par la fenêtre (5) de passage du faisceau laser, et d'autre part d'un gaz secondaire circulant axialement entre la tête et le tube (2).

   Application au manchonnage des tubes des générateurs de vapeur des réacteurs nucléaires à eau pressurisée.

FIG.1

EP 0 438 940 A2

## PROCEDE ET TETE DE TRAVAIL AU LASER DANS UN TUBE

La présente invention est relative au travail au laser dans un tube. Elle s'applique notamment au soudage au laser dans des tubes de faible diamètre tels que les tubes d'eau primaire des générateurs de vapeur des réacteurs nucléaires à eau pressurisée.

Il est de pratique courante d'envoyer un gaz primaire dans la zone de travail, à travers la tête de travail, afin, notamment, de protéger le bain de fusion de l'oxydation.

L'invention a pour but de permettre d'augmenter la qualité, la fiabilité et la reproductibilité des soudures.

A cet effet, l'invention a pour objet un procédé de travail au laser dans un tube, du type dans lequel on envoie dans la zone de travail, à travers la tête de travail, un gaz primaire de protection, caractérisé en ce qu'on envoie en outre un gaz secondaire entre la périphérie de la tête et le tube, jusque dans la zone de travail.

L'invention a également pour objet une tête de travail au laser dans un tube qui est particulièrement adaptée pour la mise en oeuvre de ce procédé. Cette tête de travail, du type comprenant deux organes de centrage espacés axialement l'un de l'autre, est caractérisée en ce que l'un au moins des organes de centrage est constitué par une brosse circulaire ajourée.

Des exemples de mise en oeuvre de l'invention vont maintenant être décrits en regard du dessin annexé, sur lequel :

– la Fig. 1 représente schématiquement, en vue longitudinale et avec arrachement partiel, une tête de travail au laser conforme à l'invention ;

– la Fig. 2 est une vue analogue d'une variante ; et

– la Fig. 3 est une vue prise en coupe suivant la ligne III-III de la Fig. 1 ou de la Fig. 2.

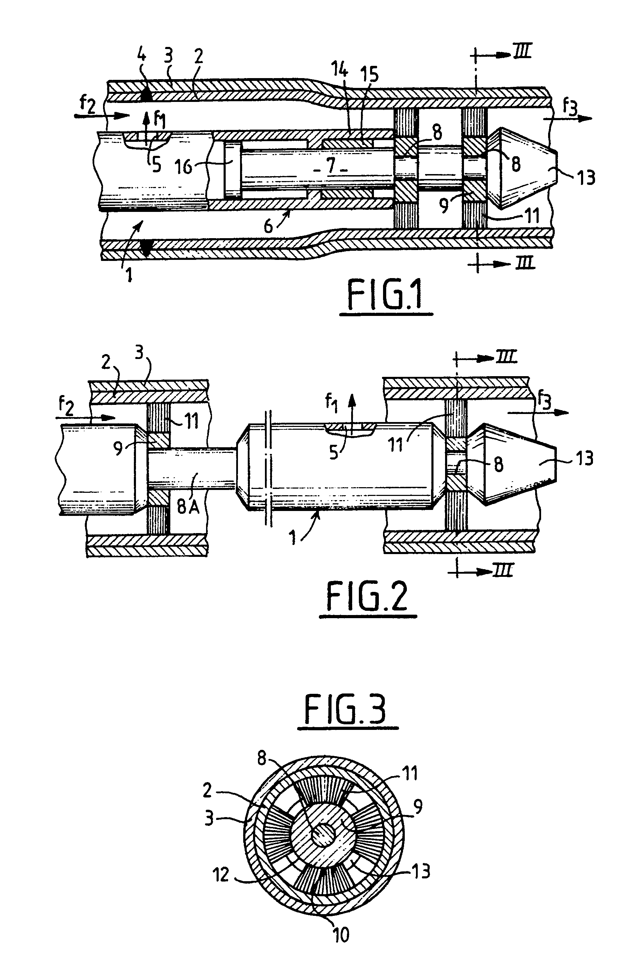

La Fig. 1 représente schématiquement une tête de soudage au laser 1 destinée à souder un manchon 2 de réparation dans un tube 3 d'eau primaire du générateur de vapeur d'un réacteur nucléaire à eau pressurisée. Comme il est classique dans la technique (voir par exemple la demande de brevet FR 89 08 634 au nom de la Demanderesse), la soudure est effectuée suivant plusieurs cordons circulaires très rapprochés tels que le cordon 4 représenté, après pré-fixation du manchon dans le tube par expansion mécanique.

La structure générale de la tête 1 est classique et peut par exemple être celle décrite dans la demande de brevet précitée. On n'a représenté à la Fig. 1 que l'extrémité avant (ou aval) de cette tête, et plus particulièrement la fenêtre 5 de sortie du faisceau laser focalisé et l'ogive 6 d'extrémité, équipée de ses moyens de centrage.

L'ogive 6 comprend un axe 7 qui présente deux portées 8 de diamètre réduit. Sur chaque portée est monté libre en rotation mais immobile en translation un moyeu 9 dont la surface extérieure est divisée en un nombre pair de secteurs (Fig. 3) : des secteurs 10, au nombre de quatre dans cet exemple, sur lesquels font saillie un grand nombre de poils de brosse 11, et, entre les secteurs 10, un même nombre de secteurs 12 dépourvus de poils. Ainsi, en vue en bout (Fig. 3), chaque ensemble 9 à 12 forme une brosse circulaire ajourée par les quatre secteurs 12.

L'extrémité avant de l'axe 7 porte un nez convergent 13, et sa partie amont est montée coulissante dans un tube d'extrémité aval 14 de la tête 1, tube dans lequel est prévue une bague de guidage 15. L'extrémité amont de l'axe 7 porte un élargissement 16 qui coopère avec une butée radiale 17 prévue dans le tube 14 pour limiter l'extension de l'axe 7 hors du tube 14.

Pour effectuer la soudure, la tête 1 est enfoncée dans le manchon 2 à partir de la boite à eau (non représentée) du générateur de vapeur. Pendant ce mouvement, les poils 11 frottent sur la paroi intérieure du manchon, de sorte que l'axe 7 se rétracte dans le tube 14 jusqu'à sa position de butée arrière représentée, dans laquelle le moyeu 9 amont bute contre l'extrémité aval du tube 14. On amène ainsi la fenêtre 5 à l'emplacement souhaité.

Pour réaliser la soudure, on envoie dans la zone de travail deux courants de gaz :

(a) Un courant de gaz primaire amené par l'intérieur de la torche et sortant par la fenêtre 5 suivant la flèche f1. Ce gaz primaire, qui peut être un gaz neutre tel que l'argon, l'hélium ou l'azote contenant éventuellement une faible proportion, par exemple de l'ordre du %, d'un gaz actif tel que l'oxygène ou l'hydrogène, a essentiellement pour but de protéger le bain de fusion de l'oxydation.

(b) Un courant de gaz secondaire s'écoulant axialement, à partir d'un point situé à l'amont de la zone de travail, dans l'intervalle annulaire existant entre la tête 1 et le manchon 2, comme indiqué par la flèche f2. Ce gaz secondaire peut être également un gaz neutre contenant une faible proportion, par exemple quelques %, d'un gaz actif, et a pour but essentiel de désactiver les particules métalliques vaporisées à la surface du bain de fusion. Ceci permet notamment de protéger la tête 1 des projections provenant du bain de fusion.

Grâce à la constitution du dispositif de centrage formé par les deux brosses ajourées, les deux courants de gaz peuvent circuler facilement et, en particulier, s'évacuer librement vers l'aval, suivant la flèche f3. L'efficacité des gaz est ainsi accrue, ainsi par conséquent que la qualité et la reproductibilité des soudures.

Lorsqu'un cordon de soudure a été entièrement réalisé par rotation de la tête 1, on fait reculer cette dernière d'une faible distance, les brosses restant fixes, et le cordon suivant est réalisé de la même manière.

Dans la variante représentée à la Fig. 2, l'axe 7 ne porte qu'une brosse ajourée, et la tête 1 comprend, en amont de la fenêtre 5 et éventuellement à une distance relativement importante de celle-ci, une portée cylindrique 8A délimitée par deux épaulements radiaux et sur laquelle une seconde brosse ajourée de même constitution que la première est montée librement rotative et coulissante. On obtient ainsi, comme précédemment, un centrage efficace de la tête 1 permettant à celle-ci de se déplacer librement en rotation et en translation dans la zone de travail, ainsi qu'une libre circulation des gaz primaire et secondaire.

En variante, on comprend que, dans chaque cas, le gaz secondaire pourrait circuler entre la tête 1 et le manchon 2 dans le sens inverse de la flèche f2.

L'invention s'applique à d'autres types de travaux au laser, par exemple au raccordement soudé de deux tubes, disposés bout-à-bout ou emboîtés l'un dans l'autre.

## Revendications

1. Procédé de travail au laser dans un tube, du type dans lequel on envoie dans la zone de travail, à travers la tête de travail (1), un gaz primaire de protection, caractérisé en ce qu'on envoie en outre un gaz secondaire entre la périphérie de la tête et le tube (2), jusque dans la zone de travail.

2. Procédé suivant la revendication 1, caractérisé en ce que le gaz secondaire est un gaz neutre contenant une petite proportion d'un gaz actif.

3. Tête de travail au laser dans un tube, du type comprenant deux organes de centrage espacés axialement l'une de l'autre, caractérisée en ce que l'un au moins des organes de centrage (9 à 12) est constitué par une brosse circulaire ajourée.

4. Tête de travail au laser suivant la revendication 3, caractérisée en ce que la brosse comprend un moyeu (9) qui présente des secteurs angulaires (10) d'où partent radialement des poils (11) et, entre ces secteurs, d'autres secteurs angulaires (12) dépourvus de poils.

5. Tête de travail au laser suivant l'une des revendications 3 et 4, caractérisée en ce qu'elle comprend deux brosses ajourées (9 à 12) espacées axialement l'une de l'autre.

6. Tête de travail au laser suivant la revendication 5, caractérisée en ce que les deux brosses ajourées sont disposées à l'extrémité de la tête (1), au-delà d'une fenêtre (5) de sortie du faisceau laser.

7. Tête de travail au laser suivant la revendication 5, caractérisée en ce que les deux brosses ajourées sont disposées de part et d'autre d'une fenêtre (5) de sortie du faisceau laser.

FIG.1

FIG.2

FIG.3